# EUROPÄISCHE PATENTSCHRIFT

(11) **EP 1 273 893 B1**
(45) Veröffentlichungstag und Bekanntmachung des Hinweises auf die Patenterteilung: **28.04.2010**
(21) Anmeldenummer: 01810641.9
(22) Anmeldetag: 02.07.2001
(51) Int. Cl.: G01F 15/00, F16K 17/38, G01F 5/00

(54) **Brandschutz-Sicherheitsvorrichtung für Gasmeter**
Security device for protection against fire for a gas meter
Dispositif de sécurité contre le feu pour un compteur à gaz

(43) Veröffentlichungstag der Anmeldung: 08.01.2003
(73) Patentinhaber: Hydrometer GmbH, 91522 Ansbach (DE)
(72) Erfinder: Kleiner, Thomas, 5442 Fislisbach (CH); Matter, Daniel, 5200 Brugg (CH); Jülke, Elias, 5430 Wettingen (CH); Kramer, Beat, 5210 Windisch (CH)
(74) Vertreter: Reitzle, Helmut

(56) Entgegenhaltungen:
- EP-A- 0 305 134
- GB-A- 2 209 200
- US-A- 4 267 853
- US-A- 4 488 566

## Beschreibung

### Technisches Gebiet

Die Erfindung bezieht sich auf eine Brandschutz-Sicherheitsvorrichtung für Gasmeter gemäss Oberbegriff des Patentanspruches 1. Die Brandschutz-Sicherheitsvorrichtung ist insbesondere für Gasmeter im Haushaltsbereich geeignet.

### Stand der Technik

Im Falle eines Brandes muss verhindert werden, dass Gas aus Gasleitungen austritt und die Explosionsgefahr erhöht. Eine bekannte Schwachstelle sind Gasmeter, welche in der Gasleitung selber oder in einer Nebenleitung oder einem Bypass dazu angeordnet sind.

Anstelle der bekannten Balgengaszähler werden vermehrt elektronische Gasmeter eingesetzt. Diese elektronischen Gasmeter weisen Sensoren auf, welche in einem Gehäuse geschützt angeordnet sind. Um die Brandschutzbestimmungen zu erfüllen, müssen diese Gehäuse und auch die elektrischen Durchführungen durch das Gehäuse hohen thermischen Belastungen standhalten. Dies erhöht die Materialund Herstellungskosten derartiger Gasmeter massiv. Da sie jedoch auch im Haushalt- und Kleingewerbebereich eingesetzt werden sollen, ist eine Kostenminimierung notwendig.

Ferner offenbart US-A-6'129'105 einen Unterbrecher für eine Gaszähler, welcher bei einem Gasleck und/oder in einem Vorauszahlsystem zum Einsatz kommt. Der Unterbrecher ist in einem Gasmeter angeordnet und grenzt an eine Gasleitung an. Er weist ein federbelastetes Ventil mit einer Membran auf, welche die Gaszufuhr unterbricht. Da im Brandfall diese Membran schmilzt, ist sie auf einem Trägerelement aus Metall angeordnet, welches im Brandfall die Dichtfunktion übernimmt. Das Ventil ist federbelastet und weist eine Schmelzsicherung auf, so dass es im Falle eines Brandes durch Federkraft gegen die Gasleitung gedrückt wird und diese verschliesst. Dieser Unterbrecher ist relativ kompliziert aufgebaut und entsprechend teuer.

Ferner offenbart EP-A-0 305 134 eine Brandschutz-Sicherheitsvorrichtung für ein in einem Bypass einer Gasleitung angeordnetes Gasmeter.

### Darstellung der Erfindung

Es ist deshalb Aufgabe der Erfindung, eine Brandschutz-Sicherheitsvorrichtung für ein in einem Bypass zu einer Gasleitung angeordnetes Gasmeter zu schaffen, welche einfach und kostengünstig, aber wirkungsvoll ist.

Diese Aufgabe löst eine Brandschutz-Sicherheitsvorrichtung mit den Merkmalen des Patentanspruches 1.

In der erfindungsgemässen Brandschutz-Sicherheitsvorrichtung ist das Gasmeter in einem Bypass zu einer Gasleitung angeordnet, wobei im Bypass in Strömungsrichtung vor und nach einem Sensor des Gasmeters mindestens ein durch Wärme aktivierbares Verschlussmittel zur Unterbrechung der Gaszufuhr angeordnet ist.

Durch die Anordnung der Verschlussmittel im Bypass muss lediglich eine relativ kleine Durchflussöffnung verschlossen werden. Zudem ist es nicht notwendig, dass das Gasmeter selber den beispielsweise durch die HTB-Norm gestellten hohen Anforderungen an die thermische Belastbarkeit im Brandfall genügt. Es reicht aus, wenn der erfindungsgemäss mit den Verschlussmittel verschlossene Bypass die Anforderungen erfüllt. Diese Brandschutz-Sicherheitsvorrichtung ist insbesondere für Gasleitungen mit elektronischen Gasmetern im Haushalt- und Kleingewerbebereich einsetzbar, da sie kostengünstig und einfach einbaubar ist.

In einer bevorzugten Ausführungsform weist das Verschlussmittel ein Verschlusselement aus blähfähigem Material auf. In einer bevorzugten Variante besteht das Verschlussmittel vollständig aus diesem blähfähigem Material.

In einer anderen bevorzugten Ausführungsform weist das Verschlussmittel einen federbelasteten Ventilkolben zum Verschluss des Bypasses auf, wobei der Ventilkolben durch ein Sicherungselement in seiner vorgespannten Position gehalten ist. Vorzugsweise handelt es sich beim Sicherungselement um eine Schmelzsicherung oder eine Bimetall-Halterung.

Weitere vorteilhafte Varianten des Verfahrens und vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1a: eine schematische Darstellung eines Gasleitungabschnittes mit einem Gasmeter bei Normalbetrieb;
- Figur 1b: den Gasleitungsabschnitt gemäss Figur 1a bei erhöhter Umgebungstemperatur;
- Figur 2a: ein vergrösserter Ausschnitt gemäss Figur 1a;
- Figur 2b: ein vergrösserter Ausschnitt gemäss Figur 1b;
- Figur 3a: ein Verschlussmittel in einer zweiten Ausführungsform im Normalbetrieb;
- Figur 3b: ein Verschlussmittel gemäss Figur 3a bei erhöhter Umgebungstemperatur;
- Figur 4a: ein Verschlussmittel in einer dritten Ausführungsform im Normalbetrieb und
- Figur 4b: ein Verschlussmittel gemäss Figur 4a bei erhöhter Umgebungstemperatur.

### Wege zur Ausführung der Erfindung

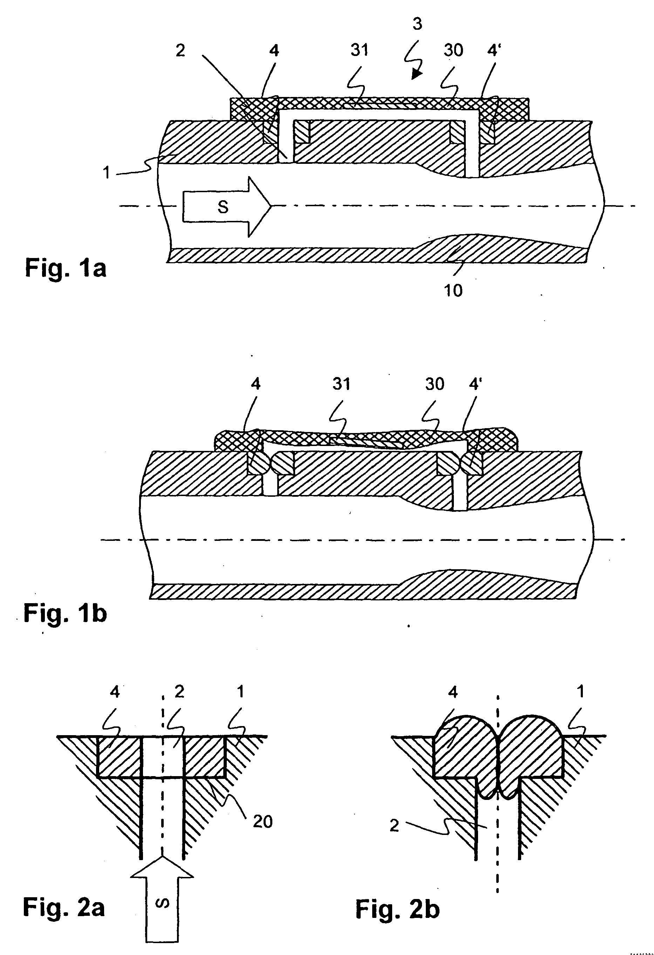

In Figur 1a ist schematisch ein Abschnitt eines Gasleitungsrohres 1 dargestellt, wie es bei einem Verbraucher, beispielsweise in einem Haus vorhanden ist. Eine Strömungsrichtung für das Gas ist in der Figur mit einem Pfeil S dargestellt.

Vom Gasleitungsrohr 1 zweigt ein Bypass 2 ab, welcher durch ein Gasmeter 3, insbesondere ein elektronisches Gasmeter, führt. Das Gasmeter 3 ist hier bloss schematisch dargestellt. Es besteht im wesentlichen aus einem Gehäuse 30 und einem im Gehäuse 30 angeordneten Sensor 31, welcher Heizelemente und Temperatursensorelemente aufweist. Die elektrischen Durchführungen nach aussen sowie eine Steuerungs- und Auswertelektronik sind nicht dargestellt. Der Bypass 2 ist vorzugsweise so angeordnet, dass er sich über einer Verjüngung 10 des Gasleitungsrohres 1 befindet.

Im Bypass 2 sind in Strömungsrichtung S vor und nach dem Sensor 31 des Gasmeters 3 je mindestens ein Verschlussmittel 4,4' zur Unterbrechung der Gaszufuhr angeordnet. Das Verschlussmittel 4,4' ist in einer Rohrwandung des Gasleitungsrohres 1 oder in einer Rohrwandung eines allfälligen Bypassrohres angeordnet.

In einem ersten Ausführungsbeispiel weist das Verschlussmittel 4,4' ein Verschlusselement aus einem blähfähigen Material auf. In der in den Figuren 1a, 1b und 2a, 2b dargestellten Variante bildet das Verschlusselement das Verschlussmittel 4,4'. Es ist vorzugsweise ringförmig ausgebildet und in einer im Bypass vorhandenen umlaufenden Nut 20 angeordnet. Das blähfähige Material erlaubt im Normalbetrieb gemäss den Figuren 1a und 2a ein Durchströmen des Gases durch den Bypass 2. Bei einer erhöhten Umgebungstemperatur, insbesondere im Brandfall, dehnt sich das Verschlusselement jedoch aus und verschliesst den Bypass irreversibel, wie dies in den Figuren 1b und 2b dargestellt ist. Es spielt dabei keine Rolle, ob das Gehäuse 30 des Gasmeters 3 geschmolzen ist.

Bei welcher Temperatur das blähfähige Material einen Verschluss bildet, hängt von der Materialwahl ab. Vorzugsweise soll sich das Material bei einer Temperatur von ungefähr 150° aufblähen und einen Blähdruck von bis zu 10 bar erreichen. Als blähfähiges Material eignet sich beispielsweise Insulex®, welches zum Abdichten von Fugen und Hohlräumen in Fenstern bekannt ist, oder Crystic Fire Guard®, welches eine Kombination aus Polyesterharz, Härter und einem Füllstoff ist.

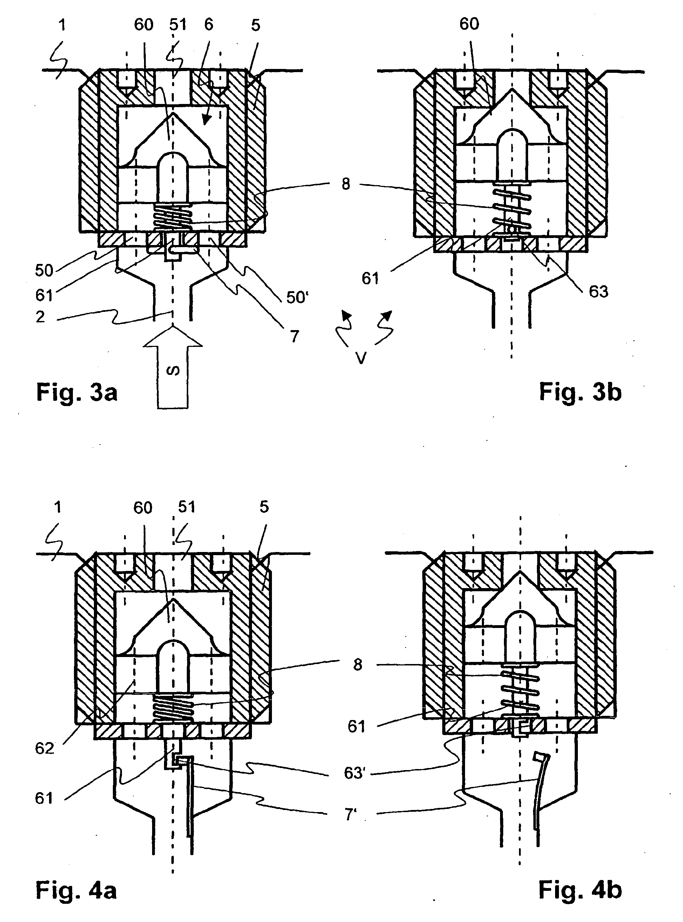

In einer zweiten bevorzugten Ausführungsform ist das Verschlussmittel durch ein mechanisches Ventil V gebildet, wie es in den Figuren 3a und 3b dargestellt ist. Mindestens je ein Ventil V ist wiederum im Bypass 2 und in Strömungrichtung vor und nach dem Sensor 31 in einer Rohrwandung 10 der Gasleitung 1 angeordnet. Das Ventil V weist ein Ventilgehäuse 5 auf, welches mindestens eine, hier zwei Eingangsöffnungen 50,50' und mindestens eine, hier genau eine, Ausgangsöffnung 51 aufweist. Ferner weist das Ventil V einen mit einer Feder 8 belasteten Ventilkolben 6 auf. Ein Ventilkopf 60 des Ventilkolbens 6 ist im Ventilgehäuse 5 angeordnet. Er weist mindestens eine Durchgangsöffnung 62 auf, um in dem in Figur 3a dargestellten Normalfall einen Gasfluss durch das Ventil zu ermöglichen. Eine mit dem Ventilkopf 60 verbundene Kolbenstange 61 ragt aus dem Ventilgehäuse 5 heraus. Die Feder 8 liegt an einem ersten Ende an einer Unterseite des Kolbenkopfes 60 und an einem zweiten Ende auf einer Innenseite des Ventilgehäuses 5 auf und umgibt die Kolbenstange 61. Der Ventilkolben 6 ist mittels eines Sicherungselementes in seiner federbelasteten Position gehalten, wobei das Sicherungselement in eine Ausnehmung 63 der Kolbenstange 61 eingreift. In dem hier beschriebenen Ausführungsbeispiel ist das Sicherungselement eine bolzenförmige Schmelzsicherung 7. Als Materialien für die Schmelzsicherung eignen sich insbesondere Materialien, welche einen Schmelzpunkt zwischen 70-120° C aufweisen. Typische Materialien sind die Woodsche Legierung, die Lipowitz'sche Legierung und andere Legierungen aus der Gruppe von Wismut, Blei, Kadmium und Zinn. Bei erhöhter Umgebungstemperatur schmilzt die Schmelzsicherung 7 und gibt die Kolbenstange 61 frei. Der Ventilkopf 60 wird durch die Feder 8 in die Ausgangsöffnung 51 gedrückt und verschliesst diese. Diese Situation ist in Figur 3b dargestellt. Der Verschluss des Bypasses ist auch hier irreversibel.

In einer dritten bevorzugten Ausführungsform gemäss den Figuren 4a und 4b wird ebenfalls das oben beschriebene Ventil V eingesetzt. Anstelle der Schmelzsicherung 7 ist jedoch eine bimetallische bügelförmige Halterung 7' vorhanden, welche in eine Ausnehmung 63' der Kolbenstange 61 eingreift, wie dies in Figur 4a dargestellt ist. Bei einer erhöhten Temperatur verbiegt sich die bimetallische Halterung 7' und gibt die Kolbenstange 61 frei, so dass der Bypass irreversibel geschlossen wird, wie dies Figur 4b zeigt.

In einer weiteren bevorzugten Ausführungsform, welche in den Figuren nicht dargestellt ist, sind mindestens zwei Verschlussmittel in Serie hintereinander angeordnet. Vorzugsweise ist dabei ein Verschlusselement aus einem blähfähigem Material gemäss den Figuren 2a, 2b und ein Ventil V gemäss den Figuren 3a, 3b oder 4a, 4b in Serie angeordnet.

Die erfindungsgemässe Vorrichtung erlaubt eine kostengünstige, einfache und wirkungsvolle Brandschutzsicherung, insbesondere für elektronische Gasmeter.

### Bezugszeichenliste

- S: Strömungsrichtung
- V: Ventil
- 1: Gasleitungsrohr
- 10: Verjüngung
- 2: Bypass
- 20: Nut
- 3: Gasmeter
- 30: Gehäuse
- 31: Sensor
- 4: erstes Verschlusselement
- 4': zweites Verschlusselement
- 5: Ventilgehäuse
- 50: erste Eingangsöffnung
- 50': zweite Eingangsöffnung
- 51: Ausgangsöffnung
- 6: Ventilkolben
- 60: Kolbenkopf
- 61: Kolbenstange
- 62: Durchgangsöffnung
- 63: Ausnehmung
- 63': Ausnehmung
- 7: Schmelzsicherung
- 7': Sicherungselement
- 8: Feder

## Patentansprüche

1. Brandschutz-Sicherheitsvorrichtung für ein Gasmeter (3), wobei die Sicherheitsvorrichtung ein in einem Bypass (2) einer Gasleitung (1) angeordnetes Gasmeter und durch Wärme aktivierbare Verschlussmittel (4,4',V) zur Unterbrechung der Gaszufuhr in das Gasmeter (3) im Falle eines Brandes aufweist,
**dadurch gekennzeichnet,**
**dass** im Bypass (2) in Strömungsrichtung vor und nach einem Sensor (31) des Gasmeters (3) mindestens je eines der genannten Verschlussmittel (4,4',V) zur Unterbrechung der Gaszufuhr angeordnet ist.

2. Vorrichtung nach Anspruch 1, **dadurch gekennzeichnet, dass** das Verschlussmittel (4,4',V) in einer Rohrwandung der Gasleitung (1) angeordnet ist.

3. Vorrichtung nach Anspruch 1, **dadurch gekennzeichnet, dass** das mindestens eine Verschlussmittel (4, 4') ein Verschlusselement aus blähfähigem Material aufweist, welches sich bei Hitzeeinwirkung ausdehnt und den Bypass (2) verschliesst.

4. Vorrichtung nach Anspruch 3, **dadurch gekennzeichnet, dass** das Verschlussmittel (4,4') ringförmig gestaltet ist und in einer im Bypass (2) vorhandenen umlaufenden Nut (20) angeordnet ist.

5. Vorrichtung nach Anspruch 1, **dadurch gekennzeichnet, dass** das mindestens eine Verschlussmittel (V) einen federbelasteten Ventilkolben (6) zum Verschluss des Bypasses (2) im Falle eines Brandes aufweist.

6. Vorrichtung nach Anspruch 5, **dadurch gekennzeichnet, dass** das Verschlussmittel (V) ein Sicherungselement (7) aufweist, welches den Ventilkolben (6) in seiner federbelasteten Position hält, wobei das Sicherungselement (7) eine Schmelzsicherung ist.

7. Vorrichtung nach Anspruch 5, **dadurch gekennzeichnet, dass** das Verschlussmittel (V) ein Sicherungselement (7') aufweist, welches den. Ventilkolben (6) in seiner federbelasteten Position hält, wobei das Sicherungselement (7') eine bimetallische Halterung ist.

8. Vorrichtung nach einem der Ansprüche 6 oder 7, **dadurch gekennzeichnet, dass** das Verschlussmittel (V) ein Ventilgehäuse (5) mit mindestens einer Eingangsöffnung (50,50') und mindestens einer Ausgangsöffnung (51) aufweist, dass das Ventilgehäuse (V) vom Ventilkolben (6) durchsetzt ist, wobei ein Kolbenkopf (60) des Ventilkolbens (6) im Ventilgehäuse (5) angeordnet ist und eine mit dem Kolbenkopf (60) verbundene Kolbenstange (61) aus dem Ventilgehäuse (5) ragt und dass das Sicherungselement (7,7') mit der Kolbenstange (61) wirkverbunden ist.

9. Vorrichtung nach Anspruch 8, **dadurch gekennzeichnet, dass** das Sicherungselement (7,7') in eine Ausnehmung (63,63') der Kolbenstange (61) eingreift.

10. Vorrichtung nach den Ansprüchen 3 und 5, **dadurch gekennzeichnet, dass** ein Verschlussmittel (4,4') gemäss Anspruch 3 und eine Verschlussmittel (V) gemäss Anspruch 5 in Serie hintereinander angeordnet sind.

## Claims

1. A fire-protection safety device for a gas meter (3), wherein the safety device has a gas meter arranged in a bypass (2) of a gas line (1) and closing means (4, 4', V) which can be activated by heat for interrupting the gas supply to the gas meter (3) in the event of a fire, **characterised in that** at least one of the aforementioned closing means (4, 4', V) for interrupting the gas supply is arranged in the bypass (2) in the direction of flow before and after a sensor (31) of the gas meter (3).

2. A device according to Claim 1, **characterised in that** the closing means (4, 4', V) is arranged in a pipe wall of the gas line (1).

3. A device according to Claim 1, **characterised in that** the at least one closing means (4, 4') has a closing element of expandable material which expands upon the action of heat and closes the bypass (2).

4. A device according to Claim 3, **characterised in that** the closing means (4, 4') is of annular form and is arranged in a circumambient groove (20) present in the bypass (2).

5. A device according to Claim 1, **characterised in that** the at least one closing means (V) has a spring-loaded valve piston (6) for closing the bypass (2) in the event of a fire.

6. A device according to Claim 5, **characterised in that** the closing means (V) has a securing element (7) which holds the valve piston (6) in its spring-loaded position, the securing element (7) being a fusible securing means.

7. A device according to Claim 5, **characterised in that** the closing means (V) has a securing element (7') which holds the valve piston (6) in its spring-loaded position, the securing element (7') being a bimetallic retaining means.

8. A device according to one of Claims 6 or 7, **characterised in that** the closing means (V) has a valve housing (5) with at least one inlet opening (50, 50') and at least one outlet opening (51), **in that** the valve housing (V) is penetrated by the valve piston (6), a piston head (60) of the valve piston (6) being arranged in the valve housing (5) and a piston rod (61) connected to the piston head (60) protruding from the valve housing (5), and **in that** the securing element (7, 7') is in an operative connection with the piston rod (61).

9. A device according to Claim 8, **characterised in that** the securing element (7, 7') engages in a recess (63, 63') in the piston rod (61).

10. A device according to Claims 3 and 5, **characterised in that** a closing means (4, 4') according to Claim 3 and a closing means (V) according to Claim 5 are arranged in series.

## Revendications

1. Dispositif de protection contre l'incendie pour compteur à gaz (3), dans lequel le dispositif de protection présente un compteur à gaz disposé dans une dérivation (2) d'une canalisation de gaz (1) et des moyens de fermeture (4, 4' V) pouvant être activés par la chaleur pour couper l'alimentation en gaz dans le compteur à gaz (3) en cas d'incendie, **caractérisé en ce que**, dans la dérivation (2), au moins un desdits moyens de fermeture (4, 4', V) est disposé respectivement en amont et en aval d'un capteur (31) du compteur à gaz (3) dans le sens de l'écoulement.

2. Dispositif selon la revendication 1 **caractérisé en ce que** le moyen de fermeture (4, 4', V) est disposé dans une paroi de tube de la canalisation de gaz (1).

3. Dispositif selon la revendication 1, **caractérisé en ce que** le au moins un moyen de fermeture (4, 4') présente un élément de fermeture constitué d'un matériau expansible qui se dilate sous l'effet de la chaleur et ferme la dérivation (2).

4. Dispositif selon la revendication 2, **caractérisé en ce que** le moyen de fermeture (4, 4') est conçu pour être annulaire, et est disposé dans une rainure circulaire (20) présente dans la dérivation (2).

5. Dispositif selon la revendication 1, **caractérisé en ce que** le au moins un moyen de fermeture (V) présente un piston de soupape (6) chargé par ressort pour la fermeture de la dérivation (2) en cas d'incendie.

6. Dispositif selon la revendication 5, **caractérisé en ce que** le moyen de fermeture (V) présente un élément de sécurité (7) qui maintient le piston de soupape (6) dans sa position chargée par ressort, l'élément de sécurité (7) étant un fusible.

7. Dispositif selon la revendication 5, **caractérisé en ce que** le moyen de fermeture (V) présente un élément de sécurité (7') qui maintient le piston de soupape (6) dans sa position chargée par ressort, le dispositif de sécurité (7') étant un support bimétallique.

8. Dispositif selon une des revendications 6 ou 7, **caractérisé en ce que** le moyen de fermeture (V) présente un carter de soupape (5) comportant au moins un orifice d'entrée (50, 50') et au moins un orifice de sortie (51), **en ce que** le carter de soupape (5) est traversé par le piston de soupape (6), une tête de piston (60) du piston de soupape (6) étant disposée dans le carter de soupape (5) et une tige de piston (61) reliée à la tête de piston (60) dépassant hors du carter de soupape (5), et **en ce que** l'élément de sécurité (7, 7') est en liaison active avec la tige de piston (61).

9. Dispositif selon la revendication 8, **caractérisé en ce que** l'élément de sécurité (7, 7') s'engage dans un évidement (63, 63') de la tige de piston (61).

10. Dispositif selon une des revendications 3 ou 5, **caractérisé en ce qu'**un moyen de fermeture (4, 4') selon la revendication 3 et un moyen de fermeture (V) selon la revendication 5 sont disposés en série les uns derrière les autres
